# EUROPEAN PATENT APPLICATION

(11) **EP 4 369 568 A1**
(43) Date of publication of application: **15.05.2024**
(21) Application number: 23764544.5
(22) Date of filing: 28.07.2023
(51) Int. Cl.: H02J 50/90, H02J 50/40, H02J 50/80, H02J 50/00, H02J 50/10, H04L 1/12

(54) **WIRELESS POWER TRANSMISSION DEVICE AND OPERATION METHOD THEREOF**

(30) Priority: 16.09.2022 KR 20220117188; 12.10.2022 KR 20220130667
(71) Applicant: Samsung Electronics Co., Ltd., Suwon-si, Gyeonggi-do 16677 (KR)
(72) Inventor: SHIN, Seungshik, Suwon-si, Gyeonggi-do 16677 (KR); KIM, Dohyeon, Suwon-si, Gyeonggi-do 16677 (KR); PARK, Baewon, Suwon-si, Gyeonggi-do 16677 (KR); PARK, Sungchul, Suwon-si, Gyeonggi-do 16677 (KR); CHOI, Jinsik, Suwon-si, Gyeonggi-do 16677 (KR)
(74) Representative: Gulde & Partner
(86) International application number: PCT/KR2023/011005
(87) International publication number: WO 2024/058414

(57) **Abstract**

According to embodiments, a wireless power transmission device may include: a first group of coils; a first inverter connected to the first group of coils; a second group of coils; a second inverter connected to the second group of coils; a converter providing power to the first inverter and the second inverter; a power source providing power to the converter; and a controller. The controller may be configured to control the first inverter to transmit first charging power to a wireless power reception device through a first coil among the first group of coils, identify a misalignment between the wireless power reception device and the first coil, and based on the identification of the misalignment, control the second inverter to transmit a ping signal through a second coil adjacent to the first coil among the second group of coils 320. The first coil and the second coil may be disposed to overlap with each other over at least partial areas thereof.

## Description

### [Technical Field]

Embodiments of the disclosure relate to a wireless power transmission device and a method of operating the same.

### [Background Art]

Wireless charging technology refers to a technology of automatically charging a battery of a portable phone by simply placing the portable phone on a wireless power transmission device (e.g., a charging pad) without connecting the portable phone to a separate charging connector. This wireless charging technology may enhance waterproofing due to no need for a connector for providing power to an electronic product and increase the portability of an electronic device due to no need for a wired charger.

Along with the development of the wireless charging technology, methods of providing power to various electronic devices (e.g., wireless power reception devices) and charging them with the power by a single electronic device (e.g., a wireless power transmission device) are under study. The wireless charging technology includes an electromagnetic induction scheme, a resonance scheme using resonance, and a radio frequency (RF)/microwave radiation scheme of converting electrical energy into microwaves and transferring the microwaves.

For example, the wireless charging technology based on electromagnetic induction or resonance has been used mainly in electronic devices such as smartphones. When a power transmitting unit (PTU) (e.g., a wireless power transmission device) and a power receiving unit (PRU) (e.g., a wireless power reception device) come into contact with each other or approach each other within a specific distance, power may be transferred to the PRU based on electromagnetic induction or electromagnetic resonance between a transmission coil of the PTU and a reception coil of the PRU, and a battery of the PRU may be charged with the transferred power.

The wireless power transmission device (or the PTU) may include an inverter and a resonator. The inverter is a device that converts direct current (DC) power into alternating current (AC) power. To increase the efficiency of the inverter, various matching circuits may be connected to an output terminal of the inverter.

The wireless power transmission device (or the PTU) may perform wireless charging in a wide area through a plurality of transmission coils connected to the inverter.

### [Disclosure of Invention]

### [Solution to Problems]

According to an embodiment, a wireless power transmission device includes: a first group of coils; a first inverter connected to the first group of coils; a second group of coils; a second inverter connected to the second group of coils; a converter providing power to the first inverter and the second inverter; a power source providing power to the converter; and a controller. The controller is configured to control the first inverter to transmit first charging power to a wireless power reception device through a first coil among the first group of coils, identify a misalignment between the wireless power reception device and the first coil, and based on the identification of the misalignment, control the second inverter to transmit a ping signal through a second coil adjacent to the first coil among the second group of coils. The first coil and the second coil are disposed to overlap with each other over at least partial areas thereof.

According to an embodiment, a method of operating a wireless power transmission device includes transmitting first charging power to a wireless power reception device through a first coil among a first group of coils of the wireless power transmission device by controlling a first inverter connected to the first group of coils. The method includes identifying a misalignment between the wireless power reception device and the first coil, and based on the identification of the misalignment. The method includes transmitting a ping signal through a second coil adjacent to the first coil among a second group of coils of the wireless power transmission device by controlling the second inverter connected to the second group of coils. The first coil and the second coil are disposed to overlap with each other over at least partial areas thereof.

According to an embodiment, a computer-readable recording medium stores instructions configured to cause a controller of a wireless power transmission device to perform at least one operation. The at least one operation includes transmitting first charging power to a wireless power reception device through a first coil among a first group of coils of the wireless power transmission device by controlling a first inverter connected to the first group of coils. The at least one operation includes identifying a misalignment between the wireless power reception device and the first coil, and based on the identification of the misalignment. The at least one operation includes transmitting a ping signal through a second coil adjacent to the first coil among a second group of coils of the wireless power transmission device by controlling the second inverter connected to the second group of coils. The first coil and the second coil are disposed to overlap with each other over at least partial areas thereof.

### [Brief Description of Drawings]

FIG. 1 is a block diagram illustrating a wireless power transmission device and a wireless power reception device according to an embodiment.
FIG. 2 is a block diagram illustrating a wireless power transmission device and a wireless power reception device according to an embodiment.
FIG. 3 is a block diagram illustrating a wireless power transmission device according to an embodiment.
FIG. 4 is a diagram illustrating a plurality of coils, a plurality of switches, and a plurality of inverters included in a wireless power transmission device according to an embodiment.
FIG. 5 is a diagram illustrating arrangement of a plurality of coils included in a wireless power transmission device according to an embodiment.
FIG. 6 is a diagram illustrating a plurality of coils, a plurality of switches, and a plurality of inverters included in a wireless power transmission device according to an embodiment.
FIG. 7 is a diagram illustrating arrangement of a plurality of coils included in a wireless power transmission device according to an embodiment.
FIG. 8 is a diagram illustrating a plurality of coils included in a wireless power transmission device according to an embodiment.
FIG. 9 is a diagram illustrating a plurality of coils included in a wireless power transmission device according to an embodiment.
FIG. 10 is a flowchart illustrating a method of operating an electronic device according to an embodiment.
FIG. 11 is a flowchart illustrating a method of operating a wireless power transmission device according to an embodiment.

### [Mode for the Invention]

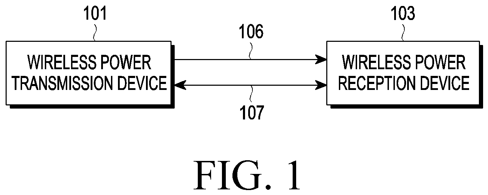

FIG. 1 is a block diagram illustrating a wireless power transmission device and a wireless power reception device according to an embodiment.

Referring to FIG. 1, a wireless power transmission device 101 according to an embodiment may wirelessly transmit power 106 to a wireless power reception device 103. Alternatively, the wireless power transmission device 101 may receive information 107 from the wireless power reception device 103. In an example, the wireless power transmission device 101 may transmit the power 106 according to an induction scheme. When the wireless power transmission device 101 operates according to the induction scheme, the wireless power transmission device 101 may include, for example, at least one of a power source, a direct current-direct current (DC/DC) conversion circuit (e.g., a DC/DC converter), a direct current-alternating current (DC-AC) conversion circuit (e.g., an inverter), an amplifier circuit, an impedance matching circuit, at least one capacitor, at least one coil, or a communication modulation circuit. The at least one capacitor together with the at least one coil may form a resonant circuit. The wireless power transmission device 101 may be at least partially implemented in a manner defined in the Qi standard of the wireless power consortium (WPC). The wireless power transmission device 101 may include a coil which is capable of generating an induced magnetic field, when current flows according to the induction scheme. An operation of generating an induced magnetic field by the wireless power transmission device 101 may be expressed as wireless transmission of the power 106 from the wireless power transmission device 101. In addition, a coil in the wireless power reception device 103 may generate an induced electromotive force (or current, a voltage, and/or power) by a magnetic field formed around the coil. A process of generating an induced electromotive force through a coil may be expressed as wireless reception of the power 106 at the wireless power reception device 103.

The wireless power transmission device 101 according to an embodiment may communicate with the wireless power reception device 103. For example, the wireless power transmission device 101 may communicate with the wireless power reception device 103 according to an in-band scheme, wherein the disclosure is not limited to such communication. The wireless power transmission device 101 may modulate data to be transmitted according to, for example, a frequency shift keying (FSK) modulation scheme, and the wireless power reception device 103 may provide the information 107 by performing modulation according to an amplitude shift keying (ASK) modulation scheme. Other modulation schemes known to those skilled in the art are likewise possible. The wireless power transmission device 101 may identify the information 107 provided by the wireless power reception device 103 based on the amplitude of current and/or a voltage applied to a transmission coil. While the wireless power reception device 103 is shown in FIG. 1 as transmitting the information 107 directly to the wireless power transmission device 101, this is only for easy understanding, and those skilled in the art will understand that the wireless power reception device 103 controls only on/off of at least one switch inside it. An operation of performing modulation based on an ASK modulation scheme and/or an FSK modulation scheme may be understood as an operation of transmitting data (or a packet) according to an in-band communication scheme, and an operation of performing demodulation based on an ASK demodulation scheme and/or an FSK demodulation scheme may be understood as an operation of receiving data (or a packet) according to the in-band communication scheme.

In this document, when it is said that the wireless power transmission device 101 or the wireless power reception device 103 performs a specific operation, this may imply that various hardware included in the wireless power transmission device 101 or the wireless power reception device 103, for example, a controller such as a micro controlling unit (MCU), a field programmable gate array (FPGA), an application specific integrated circuit (ASIC), a microprocessor, or an application processor (AP) performs the specific operation. The aforementioned may also referred to simply as a processor or processing unit. Alternatively, when it is said that the wireless power transmission device 101 or the wireless power reception device 103 performs a specific operation, this may imply that the controller controls other hardware to perform the specific operation. Alternatively, when it is said that the wireless power transmission device 101 or the wireless power reception device 103 performs a specific operation, this may also imply that when it is executed, at least one instruction for performing the specific operation, stored in a storage circuit (e.g., memory) of the wireless power transmission device 101 or the wireless power reception device 103, causes the controller or other hardware to perform the specific operation.

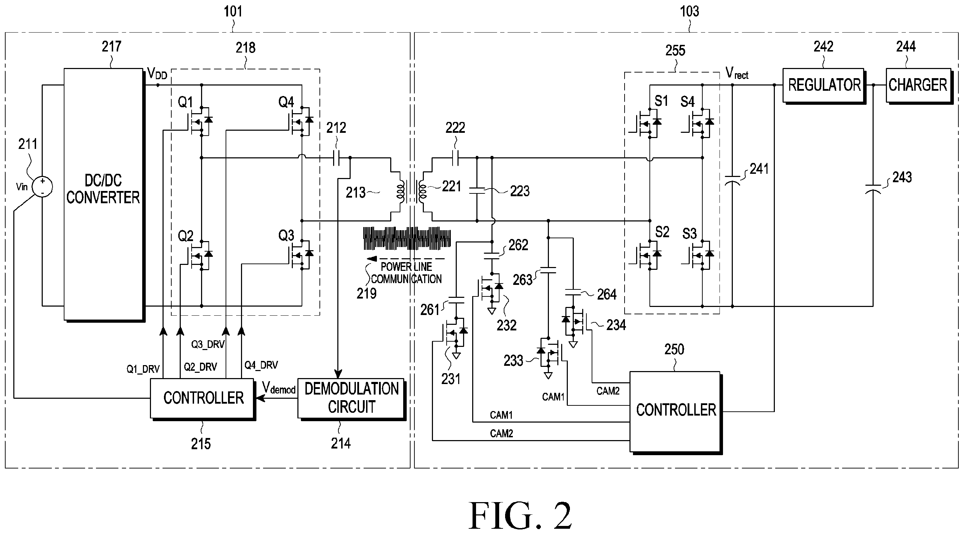

FIG. 2 is a block diagram illustrating a wireless power transmission device and a wireless power reception device according to an embodiment.

According to an embodiment, the wireless power transmission device 101 may include at least one of a power source 211, an inverter 218 including a plurality of switches Q1, Q2, Q3, and Q4, a capacitor 212, a transmission coil 213, a demodulation circuit 214, a controller 215, or a DC/DC converter 217.

According to an embodiment, power provided by the power source 211 may be provided to the DC/DC converter 217. The power source 211 may include at least one of an interface to connect to an external travel adapter (TA), a battery (not shown) of the wireless power transmission device 101, a charger (not shown), or a power management integrated circuit (PMIC) (not shown). The power source 211 may supply, for example, DC power to the DC/DC converter 217. However, the type of the provided power is not limited. The DC/DC converter 217 may convert the voltage of the provided power and provide the converted voltage to the inverter 218. The DC/DC converter 217 may change the voltage of the received DC power, e.g. reduce the voltage, and provide the DC power having the changed voltage (or a driving voltage VDD) to the inverter 218. The DC/DC converter 217 may perform, for example, buck conversion and/or boost conversion and be implemented as, for example, a 3-level converter. However, those skilled in the art will understand that the type of the DC/DC converter is not limited.

The inverter 218 according to the embodiment may output AC power using the driving voltage VDD provided from the DC/DC converter 217. The plurality of switches Q1, Q2, Q3, and Q4 may configure, for example, a full bridge circuit. However, the number of switches or the type of the bridge circuit is not limited. For example, when a full bridge circuit is configured, one end of the transmission coil 213 may be connected to a connection point between the switches Q1 and Q2 through the capacitor 212, and the other end of the transmission coil 213 may be connected to a connection point between the switches Q3 and Q4. The plurality of switches Q1, Q2, Q3, and Q4 may be controlled to an on state or an off state. For example, to generate AC power, the controller may control the first switch Q1 and the third switch Q3 to the on state and the second switch Q2 and the fourth switch Q4 to the off state during a first period. During a second period, the controller may control the first switch Q1 and the third switch Q3 to the off state and the second switch Q2 and the fourth switch Q4 to the on state. The controller may repeat the above-described control operations. The controller 215 may provide control signals Q1_DRV, Q2_DRV, Q3_DRV, and Q4_DRV for generating the above-described AC power to the plurality of switches Q1, Q2, Q3, and Q4. Refraining from outputting the control signals as well as outputting the control signals may be referred to as control by the controller 215. For example, when it is said that the controller 215 outputs a first control signal for generating AC power having a first frequency to the inverter 217, this may imply that the controller 215 outputs control signals Q1_DRV and Q3_DRV for controlling the switches Q1 and Q3 to the on state during a period corresponding to the first frequency, subsequently outputs the control signals Q2_DRV and Q4_DRV for controlling the switches Q2 and Q4 to the on state during the period corresponding to the first frequency, and repeats the above-described output operations. On the other hand, when it is said that the controller 215 outputs a second control signal for generating AC power having a second frequency to the inverter 217, this may imply that the controller 215 outputs the control signals Q1_DRV and Q3_DRV for controlling the switches Q1 and Q3 to the on state during a period corresponding to the second frequency, subsequently outputs control signals Q2_DRV, and Q4_DRV for controlling the switches Q2 and Q4 to the on state during the period corresponding to the second frequency, and repeats the above-described output operations. In this case, the period corresponding to the second frequency may be different from the period corresponding to the first frequency. By means of the aforementioned full bridge circuit of the inverter 218, AC power can be generated effectively.

According to an embodiment, the AC power generated by the inverter 218 may be applied to the transmission coil 213. The capacitor 212 may form a resonant circuit with the transmission coil 213. The transmission coil 213 may form a magnetic field based on the applied AC power. A part of the magnetic field (or magnetic flux) formed by the transmission coil 213 may pass through a cross section of the reception coil 221 of the wireless power reception device 103. As the magnetic field passing through the cross section of the reception coil 221 changes over time, an induced electromotive force (e.g., current, a voltage, or power) may be generated in the reception coil 221.

According to an embodiment, the demodulation circuit 214 may demodulate a signal applied to the transmission coil 213 (e.g., a voltage 219 across the transmission coil 213) and output the demodulated signal V_{demod}. The demodulation circuit 214 may output the demodulated signal V_{demod}, for example, by down converting the frequency of a signal applied to the transmission coil 213 (e.g., the voltage 219 across the transmission coil 213) by as much as the frequency (e.g., 100kHz to 210kHz) of the AC power. For example, the demodulation circuit 214 may include a mixer and/or a multiplier circuit to cancel a carrier component (e.g., the frequency of the AC power, 100kHz to 210kHz) for wireless power transmission. Because a waveform, in which a component based on modulation of the wireless power reception device 103 and an AC power component caused by the wireless power transmission device 101 are mixed, may be applied to both ends of the coil 213 of the wireless power transmission device 101, the frequency component (e.g., 100kHz to 210kHz) of the AC power is referred to as a carrier component, and those skilled in the art will understand that the wireless power reception device 103 does not actually generate electromagnetic waves by mixing modulated data with a carrier. Accordingly, the carrier component (e.g., the frequency of the AC power, 100kHz to 210kHz) may be canceled from the voltage 219 across the transmission coil 213. The demodulation circuit 214 may additionally filter (low pass filter) the demodulated signal V_{demod} and output the filtered signal. The demodulation circuit 214 may include a low pass filter. Alternatively, the demodulation circuit 214 may generate the demodulated signal V_{demod} by filtering the voltage 219 across the transmission coil 213 and then down converting the frequency of the filtered signal by as much as the frequency (e.g., 100kHz to 210kHz) of the AC power. The amplitude of the voltage 219 across the transmission coil 213 may be changed according to e.g. ASK modulation or FSK modulation of the wireless power reception device 103. According to an embodiment, the controller 215 may identify information provided by the wireless power reception device 103 based on the demodulated signal V_{demod} output from the demodulation circuit 214. The controller 215 may perform, for example, analog-to-digital conversion (ADC) on the demodulated signal V_{demod}. The controller 215 may decode a digital value obtained as a result of the ADC and identify the information provided by the wireless power reception device 103 according to a result of the decoding. Those skilled in the art will understand that a decoding scheme may be based on, but not limited to, the Qi standard, for example. While it has been described that the demodulation circuit 214 performs frequency downconversion (e.g., carrier cancellation) and/or low pass filtering, and the controller 215 performs ADC and/or decoding in the above-described embodiment, this is merely illustrative. According to various embodiments, the demodulation circuit 214 may be implemented to further perform at least one of ADC or decoding, and according to another embodiment, the controller 215 may be implemented to further perform frequency downconversion (e.g., carrier cancellation) and/or low pass filtering.

According to the embodiment, the wireless power reception device 103 may include at least one of a reception coil 221, a capacitor 222, a capacitor 223, a rectifier circuit 255, a controller 250, a plurality of capacitors 261, 262, 263, and 264, a plurality of switches 231, 232, 233, and 234, a capacitor 241, a regulator 242, a capacitor 243, or a charger 244.

According to an embodiment, the reception coil 221, the capacitor 222, and the capacitor 223 may form a resonant circuit. One end of the capacitor 222 may be connected to the reception coil 221, and the other end of the capacitor 222 may be connected to one end of the capacitor 223 and one end of the rectifier circuit 255. The one end of the capacitor 223 may be connected to the other end of the capacitor 222, and the other end of the capacitor 223 may be connected to the other end of the reception coil 221. In other words, the capacitor 223 may be connected in parallel to a circuit formed by connecting the reception coil 221 and the capacitor 222 in series. The other end of the capacitor 223 may be connected to the other end of the rectifier circuit 255.

According to an embodiment, the rectifier circuit 255 may include a plurality of switches S1, S2, S3, and S4 forming a full bridge circuit. One end of the resonant circuit may be connected to a connection point between the switches S1 and S2, and the other end of the resonant circuit may be connected to a connection point between the switches S3 and S4. The rectifier circuit 255 may convert AC power received through the reception coil 221 into DC power. The controller 250 may control the on/off states of the plurality of switches S1, S2, S3, and S4 to convert AC power into DC power.

According to an embodiment, the capacitor 241 and the regulator 242 may be connected to the rectifier circuit 255. One end of the capacitor 241 may be grounded. The regulator 242 may perform conversion (e.g., buck conversion and/or boost conversion) and/or regulation on the voltage of rectified power output from the rectifier circuit 255.

According to an embodiment, the charger 244 may charge a battery (not shown) with the power converted and/or regulated by the regulator 242. According to an embodiment, the charger 244 may control a voltage and/or current for charging the battery according to a charge mode (e.g., constant current (CC) mode, constant voltage (CV) mode, or fast charge mode) of the battery. Depending on implementation, a PMIC (not shown) instead of the charger 244 may be connected to the regulator 242.

According to an embodiment, the controller 250 may perform modulation according to information to be provided. The controller 250 may determine a capacitor to perform modulation among the plurality of capacitors 261, 262, 263, and 264. A difference in amplitude of the voltage 219 sensed by the wireless power transmission device 101 may be changed according to the capacitor to perform modulation. For example, when modulation is performed with only one capacitor 261, it is assumed that the difference in amplitude of the voltage 219 sensed by the wireless power transmission device 101 (e.g., the difference between a maximum amplitude of the voltage 219 while the switch 231 is in the on state and a maximum amplitude of the voltage 219 while the switch 231 is in the off state) is a first value. In this case, since the capacitors 262, 263, and 264 are not used for the modulation, the switches 232, 233, and 234 may remain in the off state. On the other hand, when modulation is performed with the capacitor 261 and the capacitor 262, the difference in amplitude of the voltage 219 sensed by the wireless power transmission device 101 (e.g., the difference between a maximum amplitude of the voltage 219 while the switches 231 and 232 are in the on state and a maximum amplitude of the voltage 219 while the switches 231 and 232 are in the off state) is a second value, which may be greater than the first value. In this case, since the capacitors 263 and 264 are not used for the modulation, the switches 233 and 234 may remain in the off state. The wireless power reception device 103 may adjust a modulation degree (or modulation depth) by adjusting a capacitor to perform modulation among the plurality of capacitors 261, 262, 263, and 264. As described above, the controller 250 may output or/and refrain from outputting at least some of control signals CMA1, CMA2, CMB1, and CMB2 so that switches corresponding to undetermined capacitors remain in the off state, while performing modulation using a determined capacitor. For example, the capacitance of the capacitor 262 may be less than the capacitance of the capacitor 261, and the capacitance of the capacitor 264 may be less than the capacitance of the capacitor 263. However, this is merely illustrative, and there is no limitation on a magnitude relationship between the capacitances, which may be equal.

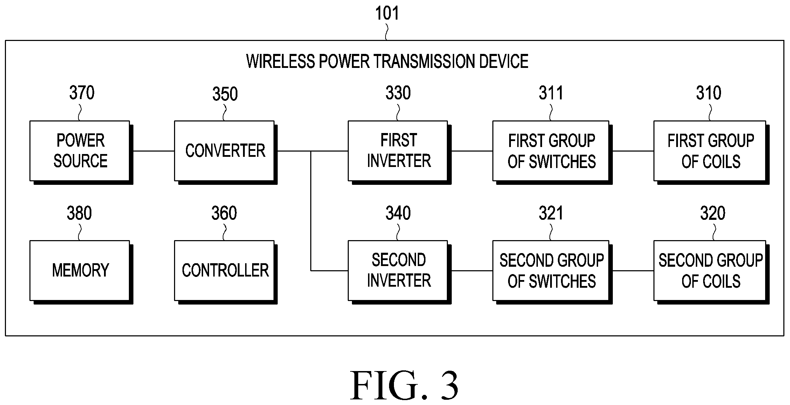

FIG. 3 is a block diagram illustrating a wireless power transmission device according to an embodiment.

Referring to FIG. 3, the wireless power transmission device 101 may include at least one of a plurality of coils (e.g., a first group of coils 310 and a second group of coils 320), a plurality of switches (e.g., a first group of switches 311 and a second group of switches 321), a plurality of inverters (e.g., a first inverter 330 and a second inverter 340), at least one converter (e.g., a converter 350), a controller 360, a power source 370, or memory 380. For example, the wireless power transmission device 101 may include two coils, two switches, and two inverters.

The power source 370 of FIG. 3 may be the power source 211 of FIG. 2. The converter 350 of FIG. 3 may be the DC/DC converter 217 of FIG. 2. Although one converter 350 is shown in FIG. 3, this is exemplary, and the wireless power transmission device 101 may include a converter connected to the first inverter 330 and a converter connected to the second inverter 340. The controller 360 of FIG. 3 may be the controller 215 of FIG. 2. Each of the first inverter 330 and the second inverter 340 of FIG. 3 may be implemented to be similar to the inverter 218 of FIG. 2. Although two inverters 330 and 340 are shown in FIG. 3, this is exemplary, and the number of inverters included in the wireless power transmission device 101 is not limited. For example, when the plurality of coils (e.g., the first group of coils 310 and the second group of coils 320) are grouped into a plurality of groups, the wireless power transmission device 101 may include a plurality of inverters corresponding to the number of the groups. Depending on the arrangement of coils, there may be three, four or even more groups of coils and a corresponding number of inverters. Each of the plurality of coils (e.g., the first group of coils 310 and the second group of coils 320) of FIG. 3 may correspond to the transmission coil 213 of FIG. 2. The wireless power transmission device 101 may include a plurality of coils corresponding to the transmission coil 213 of FIG. 2. The plurality of switches (e.g., the first group of switches 311 and the second group of switches 321) of FIG. 3 may correspond to the plurality of coils of FIG. 3 (e.g., the first group of coils 310 and the second group of coils 320), respectively. The wireless power transmission device 101 may include the plurality of switches (e.g., the first group of switches 311 and the second group of switches 321) corresponding to the number of the plurality of coils (e.g., the first group of coils 310 and the second group of coils 320). Alternatively, a number of switches may be smaller than a number of coils such that multiple coils may be controlled by one switch. The wireless power transmission device 101 may not include the switches (e.g., the first group of switches 311 and the second group of switches 321). When the wireless power transmission device 101 does not include the switches (e.g., the first group of switches 311 and the second group of switches 321), the plurality of inverters (e.g., the first inverter 330 and the second inverter 340) may be directly connected to the plurality of coils (e.g., the first group of coils 310 and the second group of coils 320), respectively.

The wireless power transmission device 101 (e.g., the controller 360) may wirelessly transmit power to the outside through the plurality of coils (e.g., the first group of coils 310 and the second group of coils 320) by controlling the plurality of inverters (e.g., the first inverter 330 and the second inverter 340) and the plurality of switches (e.g., the first group of switches 311 and the second group of switches 321).

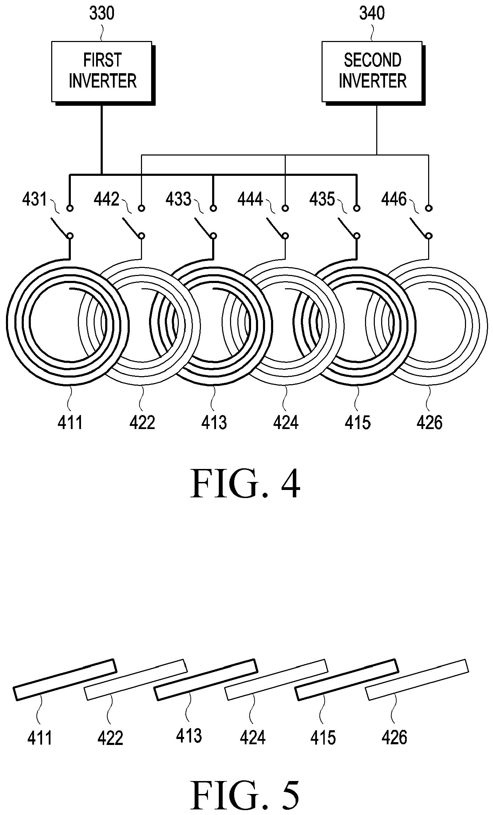

FIG. 4 is a diagram illustrating a plurality of coils, a plurality of switches, and a plurality of inverters included in a wireless power transmission device according to an embodiment. FIG. 4 may be described with reference to FIGS. 3 and 5. FIG. 5 is a diagram illustrating arrangement of a plurality of coils included in a wireless power transmission device according to an embodiment.

Referring to FIG. 4, the wireless power transmission device 101 may include a plurality of coils (e.g., a first coil 411, a second coil 422, a third coil 413, a fourth coil 424, a fifth coil 415, and a sixth coil 426). It is underlined that the plurality of coils includes the case that only two coils are used, wherein each of the two coils represents a group of coils. The first group of coils 310 of FIG. 3 may include the first coil 411, the third coil 413, and the fifth coil 415 of FIG. 4. The second group of coils 320 of FIG. 3 may include the second coil 422, the fourth coil 424, and the sixth coil 426 of FIG. 4.

Referring to FIG. 4, the wireless power transmission device 101 may include a plurality of switches (e.g., a first switch 431, a second switch 442, a third switch 433, a fourth switch 444, a fifth switch 435, and a sixth switch 446). The wireless power transmission device 101 (e.g., the controller 360) may control the plurality of switches (e.g., the first switch 431, the second switch 442, the third switch 433, the fourth switch 444, the fifth switch 435, and the sixth switch 446). The first group of switches 311 of FIG. 3 may include the first switch 431, the third switch 433, and the fifth switch 435 of FIG. 4. The second group of switches 321 of FIG. 3 may include the second switch 442, the fourth switch 444, and the sixth switch 446 of FIG. 4. The first switch 431 may be connected to the first coil 411. The second switch 442 may be connected to the second coil 422. The third switch 433 may be connected to the third coil 413. The fourth switch 444 may be connected to the fourth coil 424. The fifth switch 435 may be connected to the fifth coil 415. The sixth switch 446 may be connected to the sixth coil 426.

Referring to FIG. 4, a first inverter 330 may be connected to the first coil 411, the third coil 413, and the fifth coil 415. The first inverter 330 may be connected to the first coil 411 through the first switch 431. The first inverter 330 may be connected to the third coil 413 through the third switch 433. The first inverter 330 may be connected to the fifth coil 415 through the fifth switch 435. The second inverter 340 may be connected to the second coil 422, the fourth coil 424, and the sixth coil 426. The second inverter 340 may be connected to the second coil 422 through the second switch 442. The second inverter 340 may be connected to the fourth coil 424 through the fourth switch 444. The second inverter 340 may be connected to the sixth coil 426 through the sixth switch 446. Hence, the respective inverters may be connected to the coils in an alternating manner but the present disclosure is not limited to such embodiment.

Referring to FIGS. 4 and 5, the plurality of coils (e.g., the first coil 411, the second coil 422, the third coil 413, the fourth coil 424, the fifth coil 415, and the sixth coil 426) may overlap with each other. Overlap between the coils may amount to overlap between at least partial areas of the coils, when the coils are viewed from above. Among the plurality of coils including the first group of coils 310 and the second group of coils 320 (e.g., the first coil 411, the second coil 422, the third coil 413, the fourth coil 424, the fifth coil 415, and the sixth coil 426), coils adjacent to each other may be disposed such that at least partial areas of the coils overlap with each other. For example, at least a partial area of the first coil 411 may overlap with at least a partial area of the second coil 422. At least a partial area of the second coil 422 may overlap with at least a partial area of the third coil 413. At least a partial area of the third coil 413 may overlap with at least a partial area of the fourth coil 424. At least a partial area of the fourth coil 424 may overlap with at least a partial area of the fifth coil 415. At least a partial area of the fifth coil 415 may overlap with at least a partial area of the sixth coil 426. The size of an overlapped area of each of the plurality of coils (e.g., the first coil 411, the second coil 422, the third coil 413, the fourth coil 424, the fifth coil 415, and the sixth coil 426) is not limited. For example, each of the plurality of coils (e.g., the first coil 411, the second coil 422, the third coil 413, the fourth coil 424, the fifth coil 415, and the sixth coil 426) may be overlapped by the radius of the coil. While the plurality of coils (e.g., the first coil 411, the second coil 422, the third coil 413, the fourth coil 424, the fifth coil 415, and the sixth coil 426) are shown in FIG. 4 as being arranged in a row, this is exemplary, and an arrangement direction of the plurality of coils (e.g., the first coil 411, the second coil 422, the third coil 413, the fourth coil 424, the fifth coil 415, and the sixth coil 426) is not limited. Accordingly, more than two coils might also overlap in such case.

Referring to FIG. 5, the plurality of coils (e.g., the first coil 411, the second coil 422, the third coil 413, the fourth coil 424, the fifth coil 415, and the sixth coil 426) may be arranged in the same layer. For example, as the first coil 411, the second coil 422, the third coil 413, the fourth coil 424, the fifth coil 415, and the sixth coil 426 are arranged such that at least partial areas of coils adjacent to each other overlap with each other, they may be arranged in one layer. By means of this, a manufacturing process can be facilitated.

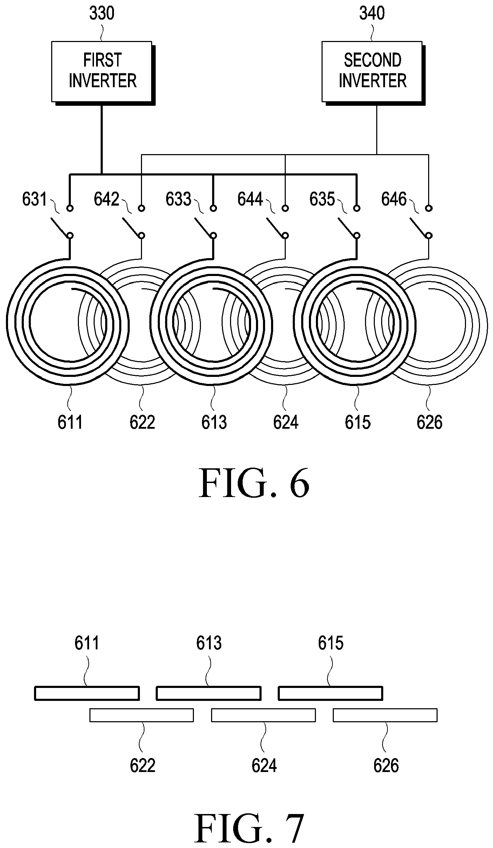

FIG. 6 is a diagram illustrating a plurality of coils, a plurality of switches, and a plurality of inverters included in a wireless power transmission device according to an embodiment. FIG. 6 may be described with reference to FIGS. 3 and 7. FIG. 7 is a diagram illustrating arrangement of a plurality of coils included in a wireless power transmission device according to an embodiment.

FIGS. 6 and 7 are diagrams illustrating a coil arrangement different from the coil arrangement of FIGS. 4 and 5.

Referring to FIG. 6, the wireless power transmission device 101 may include a plurality of coils (e.g., a first coil 611, a second coil 622, a third coil 613, a fourth coil 624, a fifth coil 615, and a sixth coil 626). The first group of coils 310 of FIG. 3 may include the first coil 611, the third coil 613, and the fifth coil 615 of FIG. 6. The second group of coils 320 of FIG. 3 may include the second coil 622, the fourth coil 624, and the sixth coil 626 of FIG. 6.

Referring to FIG. 6, the wireless power transmission device 101 may include a plurality of switches (e.g., a first switch 631, a second switch 642, a third switch 633, a fourth switch 644, a fifth switch 635, and a sixth switch 646). The wireless power transmission device 101 (e.g., the controller 360) may control the plurality of switches (e.g., the first switch 631, the second switch 642, the third switch 633, the fourth switch 644, the fifth switch 635, and the sixth switch 646). The first group of switches 311 of FIG. 3 may include the first switch 631, the third switch 633, and the fifth switch 635 of FIG. 6. The second group of switches 321 of FIG. 3 may include the second switch 642, the fourth switch 644, and the sixth switch 646 of FIG. 6. The first switch 631 may be connected to the first coil 611. The second switch 642 may be connected to the second coil 622. The third switch 633 may be connected to the third coil 613. The fourth switch 644 may be connected to the fourth coil 624. The fifth switch 635 may be connected to the fifth coil 615. The sixth switch 646 may be connected to the sixth coil 626.

Referring to FIG. 6, the first inverter 330 may be connected to the first coil 611, the third coil 613, and the fifth coil 615. The first inverter 330 may be connected to the first coil 611 through the first switch 631. The first inverter 330 may be connected to the third coil 613 through the third switch 633. The first inverter 330 may be connected to the fifth coil 615 through the fifth switch 635. The second inverter 340 may be connected to the second coil 622, the fourth coil 624, and the sixth coil 626. The second inverter 340 may be connected to the second coil 622 through the second switch 642. The second inverter 340 may be connected to the fourth coil 624 through the fourth switch 644. The second inverter 340 may be connected to the sixth coil 626 through the sixth switch 646.

Referring to FIGS. 6 and 7, the plurality of coils (e.g., the first coil 611, the second coil 622, the third coil 613, the fourth coil 624, the fifth coil 615, and the sixth coil 626) may overlap with each other. Among the plurality of coils including the first group of coils 310 and the second group of coils 320 (e.g., the first coil 611, the second coil 622, the third coil 613, the fourth coil 624, the fifth coil 615, and the sixth coil 626), coils adjacent to each other may be disposed such that at least partial areas of the coils overlap with each other. For example, at least a partial area of the first coil 611 may overlap with at least a partial area of the second coil 622. At least a partial area of the second coil 622 may overlap with at least a partial area of the third coil 613. At least a partial area of the third coil 613 may overlap with at least a partial area of the fourth coil 624. At least a partial area of the fourth coil 624 may overlap with at least a partial area of the fifth coil 615. At least a partial area of the fifth coil 615 may overlap with at least a partial area of the sixth coil 626. The size of an overlapped area of each of the plurality of coils (e.g., the first coil 611, the second coil 622, the third coil 613, the fourth coil 624, the fifth coil 615, and the sixth coil 626) is not limited. For example, each of the plurality of coils (e.g., the first coil 611, the second coil 622, the third coil 613, the fourth coil 624, the fifth coil 615, and the sixth coil 626) may be overlapped by the radius of the coil. While the plurality of coils (e.g., the first coil 611, the second coil 622, the third coil 613, the fourth coil 624, the fifth coil 615, and the sixth coil 626) are shown in FIG. 6 as being arranged in a row, this is exemplary, and an arrangement direction of the plurality of coils (e.g., the first coil 611, the second coil 622, the third coil 613, the fourth coil 624, the fifth coil 615, and the sixth coil 626) is not limited.

Referring to FIG. 7, among the plurality of coils (e.g., the first coil 611, the second coil 622, the third coil 613, the fourth coil 624, the fifth coil 615, and the sixth coil 626), the first group of coils 310 (e.g., the first coil 611, the third coil 613, and the fifth coil 615) may be arranged in a first layer. Among the plurality of coils (e.g., the first coil 611, the second coil 622, the third coil 613, the fourth coil 624, the fifth coil 615, and the sixth coil 626), the second group of coils 320 (e.g., the second coil 622, the fourth coil 624, and the sixth coil 626) may be arranged in a second layer. The first layer may be closer to an object (e.g., the wireless power reception device 103) disposed on the wireless power transmission device 101 than the second layer. When the plurality of coils (e.g., the first coil 611, the second coil 622, the third coil 613, the fourth coil 624, the fifth coil 615, and the sixth coil 626) are viewed from above, partial areas of the second group of coils 320 (e.g., the second coil 622, the fourth coil 624, and the sixth coil 626) may be covered by the first group of coils 310 (e.g., the first coil 611, the third coil 613, and the fifth coil 615). By means of using two layers, the overall height of the wireless power transmission device can be kept small.

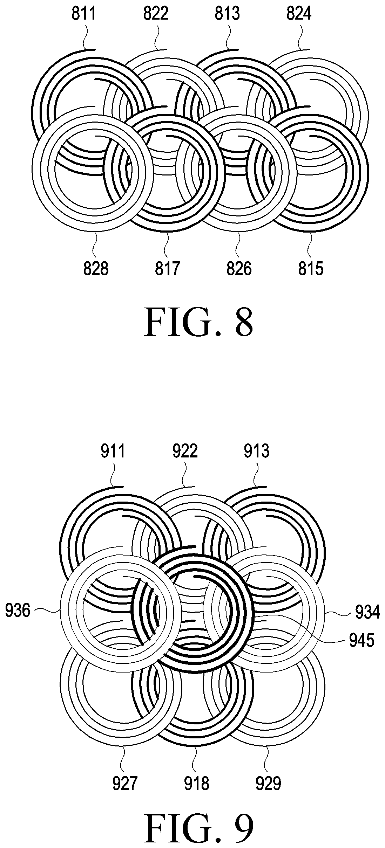

FIG. 8 is a diagram illustrating a plurality of coils included in a wireless power transmission device according to an embodiment. FIG. 9 is a diagram illustrating a plurality of coils included in a wireless power transmission device according to an embodiment.

FIGS. 4, 5, 6, and 7 illustrate embodiments in which a plurality of coils included in the wireless power transmission device 101 are arranged in a row. FIGS. 8 and 9 illustrate an embodiment in which a plurality of coils included in the wireless power transmission device 101 are arranged in a plurality of rows.

Referring to FIG. 8, the wireless power transmission device 101 may include a plurality of coils (e.g., a first coil 811, a second coil 822, a third coil 813, a fourth coil 824, a fifth coil 815, a sixth coil 826, a seventh coil 817, and an eighth coil 828). For example, the first group of coils 310 of FIG. 3 may include the first coil 811, the third coil 813, the fifth coil 815, and the seventh coil 817. The second group of coils 320 of FIG. 3 may include the second coil 822, the fourth coil 824, the sixth coil 826, and the eighth coil 828. For example, the first group of coils 310 (e.g., the first coil 811, the third coil 813, the fifth coil 815, and the seventh coil 817) may be connected to the inverter 330 of FIG. 3. Each of a first group of switches (e.g., the first group of switches 311 in FIG. 3) may connect each of the first group of coils 310 (e.g., the first coil 811 and the third coil 813, the fifth coil 815, and the seventh coil 817) to the first inverter 330. The second group of coils 320 (e.g., the second coil 822, the fourth coil 824, the sixth coil 826, and the eighth coil 828) may be connected to the second inverter 340 of FIG. 3. Each of a second group of switches (e.g., the second group of switches 321 in FIG. 3) may connect each of the second group of coils 320 (e.g., the second coil 822, the fourth coil 824, the sixth coil 826, and the eighth coil 828) to the second inverter 340. Instead of using two groups of coils, four groups of coils being connected to four inverters may also be used, wherein a first group includes coils 811 and 813, a second group includes coils 822 and 824, a third group includes coils 828 and 826, and a fourth group includes coils 817 and 815. By means of this, overlapping coils might not be connected to a same inverter.

Referring to FIG. 8, among the plurality of coils (e.g., the first coil 811, the second coil 822, the third coil 813, the fourth coil 824, the fifth coil 815, the sixth coil 826, the seventh coil 817, and the eighth coil 828), the first coil 811, the second coil 822, the third coil 813, and the fourth coil 824 may be arranged in a row. For example, the first coil 811, the second coil 822, the third coil 813, and the fourth coil 824 may be arranged in one layer, like the first coil 411, the second coil 422, the third coil 413, the fourth coil 424, the fifth coil 415, and the sixth coil 426 in FIG. 4. For example, unlike FIG. 8, each of the first coil 811, the second coil 822, the third coil 813, and the fourth coil 824 may be disposed in a different layer, such as the first coil 611, the second coil 622, the third coil 613, the fourth coil 624, the fifth coil 615, and the sixth coil 626 of FIG. 6. Among the plurality of coils (e.g., the first coil 811, the second coil 822, the third coil 813, the fourth coil 824, the fifth coil 815, and the sixth coil 826, the seventh coil 817, and the eighth coil 828) of FIG. 8, the fifth coil 815, the sixth coil 826, the seventh coil 817, and the eighth coil 828 may be arranged in a row. For example, the fifth coil 815, the sixth coil 826, the seventh coil 817, and the eighth coil 828 may be arranged in one layer, like the first coil 411, the second coil 422, the third coil 413, the fourth coil 424, the fifth coil 415, and the sixth coil 426 of FIG. 4. Said layer may be different from the layer in which the first coil 811, the second coil 822, the third coil 813, and the fourth coil 824 may be arranged. For example, unlike FIG. 8, each of the fifth coil 815, the sixth coil 826, the seventh coil 817, and the eighth coil 828 may also be disposed in a different layer, such as the first coil 611, the second coil 622, the third coil 613, the fourth coil 624, the fifth coil 615, and the sixth coil 626 of FIG. 6.

Referring to FIG. 8, the plurality of coils (e.g., the first coil 811, the second coil 822, the third coil 813, the fourth coil 824, the fifth coil 815, the sixth coil 826, the seventh coil 817, and the eighth coil 828) may overlap with each other. Among the plurality of coils (e.g., the first coil 811, the second coil 822, the third coil 813, the fourth coil 824, the fifth coil 815, the sixth coil 826, the seventh coil 817, and the eighth coil 828), coils adjacent to each other may be disposed such that at least partial areas of the coils overlap with each other. For example, at least a partial area of the first coil 811 may overlap with at least a partial area of the second coil 822. At least a partial area of the second coil 822 may overlap with at least a partial area of the third coil 813. At least a partial area of the third coil 813 may overlap with at least a partial area of the fourth coil 824. At least a partial area of the fourth coil 824 may overlap with at least a partial area of the fifth coil 815. At least a partial area of the fifth coil 815 may overlap with at least a partial area of the sixth coil 826. At least a partial area of the sixth coil 826 may overlap with at least a partial area of the seventh coil 817. At least a partial area of the seventh coil 817 may overlap with at least a partial area of the eighth coil 828. At least a partial area of the eighth coil 828 may overlap with at least a partial area of the first coil 811. At least a partial area of the seventh coil 817 may overlap with at least a partial area of the second coil 822. At least a partial area of the sixth coil 826 may overlap with at least a partial area of the third coil 813. As illustrated in FIG. 8, at least some of the coils included in the same group may overlap with each other. Unlike FIG. 8, the coils included in the same group may not overlap with each other. As illustrated in FIG. 9 described later, the coils included in the same group may not overlap with each other.

Referring to FIG. 9, the wireless power transmission device 101 may include a plurality of coils (e.g., a first coil 911, a second coil 922, a third coil 913, a fourth coil 934, a fifth coil 945, a sixth coil 936, a seventh coil 927, an eighth coil 918, and a ninth coil 929). For example, the first group of coils 310 of FIG. 3 may include the first coil 911, the third coil 913, and the eighth coil 918. The second group of coils 320 of FIG. 3 may include the second coil 922, the seventh coil 927, and the ninth coil 929. A third group of coils may include the fourth coil 934 and the sixth coil 936. A fourth group of coils may include the fifth coil 945 only. For example, the first group of coils 310 (e.g., the first coil 911, the third coil 913, and the eighth coil 918) may be connected to the first inverter 330 of FIG. 3. Each of a first group of switches (e.g., the first group of switches 311 in FIG. 3) may connect one of the first group of coils 310 (e.g., the first coil 911, the third coil 913, and the eighth coil 918) to the first inverter 330. The second group of coils 320 (e.g., the second coil 922, the seventh coil 927, and the ninth coil 929) may be connected to the second inverter 340 of FIG. 3. Each of the second group of switches (e.g., the second group of switches 321 in FIG. 3) may connect one of the second group of coils 320 (e.g., the second coil 922, the seventh coil 927, and the ninth coil 929) to the second inverter 340. The third group of coils (e.g., the fourth coil 934 and the sixth coil 936) may be connected to a third inverter. Each of the third group of switches may connect one of the third group of coils (e.g., the fourth coil 934 and the sixth coil 936) to the third inverter. The fourth group of coils (e.g., the fifth coil 945) may be connected to a fourth inverter. Each of the fourth group of switches, which e.g. comprises one switch only, may connect one of the fourth group of coils (e.g., the fifth coil 945) to the fourth inverter.

Referring to FIG. 9, among the plurality of coils (e.g., the first coil 911, the second coil 922, the third coil 913, the fourth coil 934, the fifth coil 945, the sixth coil 936, the seventh coil 927, the eighth coil 918, and the ninth coil 929), the first coil 911, the second coil 922, and the third coil 913 may be arranged in a row. For example, the first coil 911, the second coil 922, and the third coil 913 may be arranged in one layer (i.e. a first layer), like the first coil 411, the second coil 422, the third coil 413, the fourth coil 424, the fifth coil 415, and the sixth coil 426 of FIG. 4. For example, unlike FIG. 9, each of the first coil 911, the second coil 922, and the third coil 913 may be disposed in a different layer, such as the first coil 611, the second coil 622, the third coil 613, the fourth coil 624, the fifth coil 615, and the sixth coil 626 of FIG. 6. Among the plurality of coils of FIG. 9 (e.g., the first coil 911, the second coil 922, the third coil 913, the fourth coil 934, the fifth coil 945, the sixth coil 936, the seventh coil 927, the eighth coil 918, and the ninth coil 929), the fourth coil 934, the fifth coil 945, and the sixth coil 936 may be arranged in a row. For example, the fourth coil 934, the fifth coil 945, and the sixth coil 936 may be arranged in one layer (i.e. a second layer), like the first coil 411, the second coil 422, the third coil 413, the fourth coil 424, the fifth coil 415, and the sixth coil 426 of FIG. 4. For example, unlike FIG. 9, each of the fourth coil 934, the fifth coil 945, and the sixth coil 936 may be disposed in a different layer, like the first coil 611, the second coil 622, the third coil 613, the fourth coil 624, the fifth coil 615, and the sixth coil 626 of FIG. 6. Among the plurality of coils of FIG. 9 (e.g., the first coil 911, the second coil 922, the third coil 913, the fourth coil 934, the fifth coil 945, the sixth coil 936, the seventh coil 927, the eighth coil 918, and the ninth coil 929), the seventh coil 927, the eighth coil 918, and the ninth coil 929 may be arranged in a row. For example, the seventh coil 927, the eighth coil 918, and the ninth coil 929 may be arranged in one layer (i.e. also the first layer), like the first coil 411, the second coil 422, the third coil 413, the fourth coil 424, the fifth coil 415, and the sixth coil 426 of FIG. 4. For example, unlike FIG. 9, each of the seventh coil 927, the eighth coil 918, and the ninth coil 929 may be disposed in a different layer, like the first coil 611, the second coil 622, the third coils 613, the fourth coil 624, the fifth coil 615, and the sixth coil 626 of FIG. 6.

Referring to FIG. 9, the plurality of coils (e.g., the first coil 911, the second coil 922, the third coil 913, the fourth coil 934, the fifth coil 945, the sixth coil 936, the seventh coil 927, the eighth coil 918, and the ninth coil 929) may overlap with each other. Among the plurality of coils (e.g., the first coil 911, the second coil 922, the third coil 913, the fourth coil 934, the fifth coil 945, the sixth coil 936, the seventh coil 927, the eighth coil 918, and the ninth coil 929), coils adjacent to each other may be disposed such that at least partial areas of the coils overlap with each other. For example, at least a partial area of the first coil 911 may overlap with at least a partial area of the second coil 922. At least a partial area of the second coil 922 may overlap with at least a partial area of the third coil 913. At least a partial area of the third coil 913 may overlap with at least a partial area of the fourth coil 934. At least a partial area of the fourth coil 934 may overlap with at least a partial area of the fifth coil 945. At least a partial area of the fifth coil 945 may overlap with at least a partial area of the sixth coil 936. At least a partial area of the sixth coil 936 may overlap with at least a partial area of the seventh coil 927. At least a partial area of the seventh coil 927 may overlap with at least a partial area of the eighth coil 918. At least a partial area of the eighth coil 918 may overlap with at least a partial area of the ninth coil 929. At least a partial area of the ninth coil 929 may overlap with at least a partial area of the fourth coil 934. At least a partial area of the eighth coil 918 may overlap with at least a partial area of the fifth coil 945. At least a partial area of the fifth coil 945 may overlap with at least a partial area of the second coil 922. At least a partial area of the sixth coil 936 may overlap with at least a partial area of the first coil 911. As illustrated in FIG. 9, the coils included in the same group may not overlap with each other.

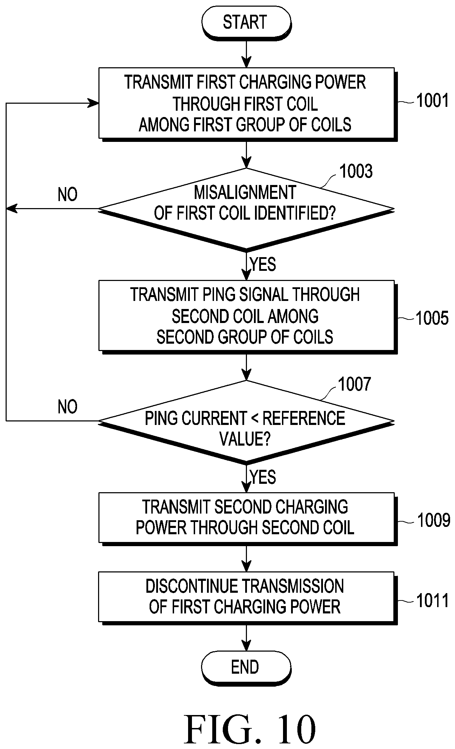

FIG. 10 is a flowchart illustrating a method of operating a wireless power transmission device according to an embodiment.

FIG. 10 may be described with reference to FIGS. 3, 4, 5, 6, 7, 8, and 9.

At least some of the operations of FIG. 10 may be omitted. The order of the operations of FIG. 10 may be changed. Operations other than the operations of FIG. 10 may be performed before, during, or after the operations of FIG. 10 are performed.

Referring to FIG. 10, according to an embodiment, the wireless power transmission device 101 (e.g., the controller 360) may control the first inverter (e.g., 330 in FIG. 3) to transmit first charging power to the wireless power reception device 103 through the first coil (e.g., 411 in FIG. 4, 611 in FIG. 6, 811 in FIG. 8, or 911 in FIG. 9) among the first group of coils (e.g., 310 in FIG. 3) in operation 1001. The wireless power transmission device 101 may control the first switch (e.g., 431 in FIG. 4 or 631 in FIG. 6), which is connected to the first coil (e.g., 411 in FIG. 4, 611 in FIG. 6, 811 in FIG. 8, or 911 in FIG. 9) among the first group of switches (e.g., 311 in FIG. 3), to the on state to transmit the first charging power to the wireless power reception device 103 through the first coil (e.g., 411 in FIG. 4, 611 in FIG. 6, 811 in FIG. 8, or 911 in FIG. 9) among the first group of coils (e.g., 310 in FIG. 3). When the wireless power transmission device 101 does not include a switch, the wireless power transmission device 101 may transmit the first charging power to the wireless power reception device 103 through the first coil (e.g., 411 in FIG. 4, 611 in FIG. 6, 811 in FIG. 8, or 911 in FIG. 9) among the first group of coils (e.g., 310 in FIG. 3) by controlling the first inverter (e.g., 330 in FIG. 3).

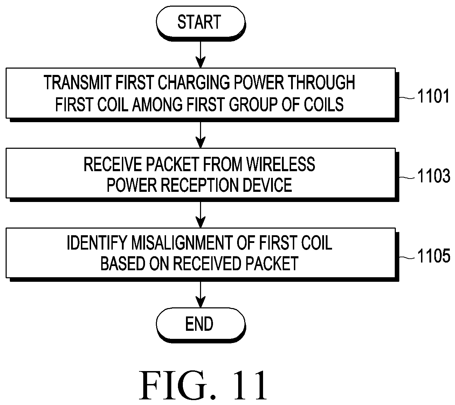

In operation 1003, the wireless power transmission device 101 (e.g., the controller 360) may identify a misalignment between the wireless power reception device 103 and the first coil (e.g., 411 in FIG. 4, 611 in FIG. 6, 811 in FIG. 8, or 911 in FIG. 9). The wireless power transmission device 101 may identify the misalignment between the wireless power reception device 103 and the first coil (e.g., 411 in FIG. 4, 611 in FIG. 6, 811 in FIG. 8, or 911 in FIG. 9), based on the transmission efficiency of the power transmitted to the wireless power reception device 103 through the first coil (e.g., 411 in FIG. 4, 611 in FIG. 6, 811 in FIG. 8, or 911 in FIG. 9) being lower than a reference efficiency. A method of identifying a misalignment is not limited. A method of identifying a misalignment will be described later with reference to FIG. 11. The wireless power transmission device 101 may continuously perform operation 1001 based on non-identification of the misalignment between the wireless power reception device 103 and the first coil (e.g., 411 in FIG. 4, 611 in FIG. 6, 811 in FIG. 8, or 911 in FIG. 9).

In operation 1005, the wireless power transmission device 101 (e.g., the controller 360) may control the second inverter (e.g., 340 in FIG. 3) to transmit a ping signal (e.g., ping power) to the wireless power reception device 103 through the second coil (e.g., 422 of FIG. 4, 622 of FIG. 6, 822 of FIG. 8, or 922 of FIG. 9) adjacent to the first coil (e.g., 411 in FIG. 4, 611 in FIG. 6, 811 in FIG. 8, or 911 in FIG. 9) among the second group of coils (e.g., 320 in FIG. 3), based on identifying the misalignment between the wireless power reception device 103 and the first coil (e.g., 411 in FIG. 4, 611 in FIG. 6, 811 in FIG. 8, or 911 in FIG. 9). For example, the wireless power transmission device 101 (e.g., the controller 360) may control the second inverter (e.g., 340 in FIG. 3) to transmit a ping signal (e.g., ping power) to the wireless power reception device 103 through the second coil (e.g., 422 of FIG. 4, 622 of FIG. 6, 822 of FIG. 8, or 922 of FIG. 9) adjacent to the first coil (e.g., 411 in FIG. 4, 611 in FIG. 6, 811 in FIG. 8, or 911 in FIG. 9) among the second group of coils (e.g., 320 in FIG. 3), while the first charging power is transmitted through the first coil (e.g., 411 in FIG. 4, 611 in FIG. 6, 811 in FIG. 8, or 911 in FIG. 9). The ping signal may be an analog ping signal or a digital ping signal. The analog ping signal or the digital ping signal may be a signal transmitted to detect the wireless power reception device 103 located on the wireless power transmission device 101. The wireless power transmission device 101 may identify a coil (e.g., the second coil (e.g., 422 of FIG. 4, 622 of FIG. 6, 822 of FIG. 8, or 922 of FIG. 9)) on which the wireless power reception device 103 exists among a plurality of coils (e.g., the second group of coils 320 of FIG. 3) of the wireless power transmission device 101 by transmitting the ping signal to the wireless power reception device 103. Depending on the overall arrangement of coils and the positioning of the wireless power reception device 103, a different coil (e.g., the eight coil 828 in FIG. 8 or the sixth coil 936 in FIG. 9) may also be identified. The wireless power transmission device 101 may identify the first coil (e.g., 411 in FIG. 4, 611 in FIG. 6, 811 in FIG. 8, or 911 in FIG. 9) transmitting the first charging power, and identify the second coil (e.g., 422 in FIG. 4, 622 in FIG. 6, 822 in FIG. 8, or 922 in FIG. 9) adjacent to the first coil (e.g., 411 in FIG. 4, 611 in FIG. 6, 811 in FIG. 8, or 911 in FIG. 9). The wireless power transmission device 101 may control the second inverter (e.g., 340 in FIG. 3) to transmit a ping signal to the wireless power reception device 103 through the identified second coil (e.g., 422 in FIG. 4, 622 in FIG. 6, 822 in FIG. 8, or 922 in FIG. 9). After transmitting the ping signal to the wireless power reception device 103 through the second coil (e.g., 422 in FIG. 4, 622 in FIG. 6, 822 in FIG. 8, or 922 in FIG. 9), the wireless power transmission device 101 may identify a ping current of the second coil (e.g., 422 in FIG. 4, 622 in FIG. 6, 822 in FIG. 8, or 922 in FIG. 9). The ping current of the second coil (e.g., 422 in FIG. 4, 622 in FIG. 6, 822 in FIG. 8, or 922 in FIG. 9) may be changed, as an object (e.g., the wireless power reception device 103) is located around the wireless power transmission device 101.

In operation 1007, the wireless power transmission device 101 (e.g., the controller 360) may compare the ping current of the second coil (e.g., 422 in FIG. 4, 622 in FIG. 6, 822 in FIG. 8, or 922 in FIG. 9) with a reference value (e.g., a first reference value). The wireless power transmission device 101 may continuously perform operations 1001-1007 based on the ping current of the second coil (e.g., 422 in FIG. 4, 622 in FIG. 6, 822 in FIG. 8, or 922 in FIG. 9) being equal to or greater than the reference value (e.g., the first reference value).

In operation 1009, the wireless power transmission device 101 (e.g., the controller 360) may control the second inverter (e.g., 340 in FIG. 3) to transmit second charging power to the wireless power reception device 103 through the second coil (e.g., 422 in FIG. 4, 622 in FIG. 6, 822 in FIG. 8, or 922 in FIG. 9), based on the ping current of the second coil (e.g., 422 in FIG. 4, 622 in FIG. 6, 822 in FIG. 8, or 922 in FIG. 9) being less than the reference value (e.g., the first reference value). The wireless power transmission device 101 may control the second switch (e.g., 422 in FIG. 4 or 642 in FIG. 6) connected to the second coil (e.g., 422 in FIG. 4, 622 in FIG. 6, 822 in FIG. 8, or 922 in FIG. 9) to the on state, among the second group of switches (e.g., 321 in FIG. 3) to transmit the second charging power to the wireless power reception device 103 through the second coil (e.g., 422 in FIG. 4, 622 in FIG. 6, 822 in FIG. 8, or 922 in FIG. 9). When the wireless power transmission device 101 does not include a switch, the wireless power transmission device 101 may transmit the second charging power to the wireless power reception device 103 through the second coil (e.g., 422 in FIG. 4, 622 in FIG. 6, 822 in FIG. 8, or 922 in FIG. 9) by controlling the second inverter (e.g., 340 in FIG. 3).

In operation 1011, the wireless power transmission device 101 (e.g., the controller 360) may control the first inverter (e.g., 330 in FIG. 3) to discontinue the transmission of the first charging power through the first coil (e.g., 411 in FIG. 4, 611 in FIG. 6, 811 in FIG. 8, or 911 in FIG. 9), based on the ping current of the second coil (e.g., 422 in FIG. 4, 622 in FIG. 6, 822 in FIG. 8, or 922 in FIG. 9) being less than the reference value (e.g., the first reference value).

The power transfer efficiency of the wireless power transmission device 101 may be increased by transmitting power through an appropriate coil in operations 1009 and 1011. For example, the power transfer efficiency may be, for example, about 20% higher in the case of transmitting the second charging power through the second coil (e.g., 422 in FIG. 4, 622 in FIG. 6, 822 in FIG. 8, or 922 in FIG. 9) than in the case of transmitting the first charging power through the first coil (e.g., 411 in FIG. 4, 611 in FIG. 6, 811 in FIG. 8, or 911 in FIG. 9). For example, the amount of power transmitted to the wireless power reception device 103 may be, for example, about three times larger in the case of transmitting the second charging power through the second coil (e.g., 422 in FIG. 4, 622 in FIG. 6, 822 in FIG. 8, or 922 in FIG. 9) than in the case of transmitting the first charging power through the first coil (e.g., 411 in FIG. 4, 611 in FIG. 6, 811 in FIG. 8, or 911 in FIG. 9). The wireless power transmission device 101 may identify a misalignment of a coil (e.g., the first coil (e.g., 411 in FIG. 4, 611 in FIG. 6, 811 in FIG. 8, or 911 in FIG. 9)), and efficiently transmit power to the wireless power reception device 103 through another coil (e.g., the second coil (e.g., 422 in FIG. 4, 622 in FIG. 6, 822 in FIG. 8, or 922 in FIG. 9)).

FIG. 11 is a flowchart illustrating a method of operating a wireless power transmission device according to an embodiment.

FIG. 11 may be described with reference to FIGS. 3, 4, 5, 6, 7, 8, 9, and 10.

At least some of the operations of FIG. 11 may be omitted. The order of the operations of FIG. 11 may be changed. Operations other than the operations of FIG. 11 may be performed before, during, or after the operations of FIG. 11 are performed. At least some of the operations of FIG. 11 may correspond to at least some of the operations of FIG. 10. The operations of FIG. 11 may be performed in close conjunction with the operations of FIG. 10.

Referring to FIG. 11, according to an embodiment, the wireless power transmission device 101 (e.g., the controller 360) may control the first inverter (e.g., 330 in FIG. 3) to transmit first charging power to the wireless power reception device 103 through the first coil (e.g., 411 in FIG. 4, 611 in FIG. 6, 811 in FIG. 8, or 911 in FIG. 9) among the first group of coils (e.g., 310 in FIG. 3). Operation 1101 may be operation 1001 of FIG. 10.

In operation 1103, the wireless power transmission device 101 (e.g., the controller 360) may receive a packet from the wireless power reception device 103. For example, the wireless power transmission device 101 may receive the packet from the wireless power reception device 103 through the first coil (e.g., 411 in FIG. 4, 611 in FIG. 6, 811 in FIG. 8, or 911 in FIG. 9). The wireless power transmission device 101 may receive the packet from the wireless power reception device 103 through the first coil (e.g., 411 in FIG. 4, 611 in FIG. 6, 811 in FIG. 8, or 911 in FIG. 9) in an in-band scheme. For example, the wireless power transmission device 101 may receive a control error packet (CEP) and/or a received power packet (RPP) from the wireless power reception device 103. The CEP may be a packet related to a magnitude of transmission power requested by the wireless power reception device 103. The RPP may be a packet related to a magnitude of power received by the wireless power reception device 103. For example, the wireless power transmission device 101 may receive the packet from the wireless power reception device 103 in an out-band scheme. The type of a packet received by the wireless power transmission device 101 and a packet reception scheme are not limited and CEP as well as RPP have been merely mentioned as examples.

In operation 1105, the wireless power transmission device 101 (e.g., the controller 360) may identify a misalignment of the first coil (e.g., 411 in FIG. 4, 611 in FIG. 6, 811 in FIG. 8, or 911 in FIG. 9) based on the packet received in operation 1103. For example, the wireless power transmission device 101 may identify a misalignment between the wireless power reception device 103 and the first coil (e.g., 411 in FIG. 4, 611 in FIG. 6, 811 in FIG. 8, or 911 in FIG. 9), based on the received CEP (e.g., CEP value) greater than a reference value (e.g., a second reference value). For example, the wireless power transmission device 101 may identify the misalignment between the wireless power reception device 103 and the first coil (e.g., 411 in FIG. 4, 611 in FIG. 6, 811 in FIG. 8, or 911 in FIG. 9), based on the received RPP (e.g., RPP value) equal to or less than a reference value (e.g., a third reference value). For example, the wireless power transmission device 101 may identify the misalignment between the wireless power reception device 103 and the first coil (e.g., 411 in FIG. 4, 611 in FIG. 6, 811 in FIG. 8, or 911 in FIG. 9), based on the received CEP (e.g., CEP value) greater than the reference value (e.g., the second reference value) and the received RPP (e.g., RPP value) equal to or less than the reference value (e.g., the third reference value). For example, the wireless power transmission device 101 may identify the misalignment between the wireless power reception device 103 and the first coil (e.g., 411 in FIG. 4, 611 in FIG. 6, 811 in FIG. 8, or 911 in FIG. 9), based on the received CEP (e.g., CEP value) kept greater than the reference value (e.g., the second reference value) during a specified period (e.g., a first period) and the received RPP (e.g., RPP value) equal to or less than the reference value (e.g., the third reference value).

Those skilled in the art will understand that the embodiments of the disclosure described herein are applicable in close conjunction with each other within an applicable scope. For example, those skilled in the art will understand that at least some operations in an embodiments of the disclosure described herein may be omitted, and at least some operations in an embodiment are applicable in close conjunction with at least some operations in another embodiment.

According to an aspect of the disclosure, the wireless power transmission device 101 may include: the first group of coils 310; the first inverter 330 connected to the first group of coils 310; the second group of coils; the second inverter 340 connected to the second group of coils 320; the converter 350 providing power to the first inverter 330 and the second inverter 340; the power source 370 providing power to the converter 350; and the controller 360. The controller 360 may be configured to control the first inverter 330 to transmit first charging power to the wireless power reception device 103 through the first coil 411, 611, 811, or 911 among the first group of coils 310, identify a misalignment between the wireless power reception device 103 and the first coil 411, 611, 811, or 911, and based on the identification of the misalignment, control the second inverter 340 to transmit a ping signal through the second coil 422, 622, 822, or 922 adjacent to the first coil 411, 611, 811, or 911 among the second group of coils 320. The first coil 411, 611, 811, or 911 and the second coil 422, 622, 822, or 922 may be disposed to overlap with each other over at least partial areas thereof.

According to an aspect of the disclosure, among the plurality of coils 411, 422, 413, 424, 415, and 426, 611, 622, 613, 624, 615, and 626, 811, 822, 813, 824, 815, 826, 817, and 828, or 911, 922, 913, 934, 945, 936, 927, 918, and 929 including the first group of coils 310 and the second group of coils 320, coils adjacent to each other may be disposed to overlap with each other over at least partial areas thereof, and the adjacent coils disposed to overlap with each other over the at least partial areas thereof may be connected to different inverters of the first inverter 330 and the second inverter 340.

According to an aspect of the disclosure, the controller 360 may be configured to, after transmitting the ping signal, identify a ping current of the second coil 422, 622, 822, or 922, and based on the ping current being less than a first reference value, control the second inverter 340 to transmit second charging power through the second coil 422, 622, 822, or 922.

According to an aspect of the disclosure, the controller 360 may be configured to, based on the ping current being less than the first reference value, control the first inverter 330 to discontinue transmitting the first charging power through the first coil 411, 611, 811, or 911.

According to an aspect of the disclosure, the controller 360 may be configured to receive a packet related to the first charging power from the wireless power reception device 103 through the first coil 411, 611, 811, or 911, and identify the misalignment based on the packet.

According to an aspect of the disclosure, the packet may include ACEP and an RPP, and the controller 360 may be configured to identify the misalignment based on the CEP being greater than a second reference value and the RPP being equal to or less than a third reference value.

According to an aspect of the disclosure, the controller 360 may be configured to identify the misalignment based on the CEP maintained greater than the second reference value during a first period and the RPP being less than or equal to the third reference value.

According to an aspect of the disclosure, the wireless power transmission device 101 may further include the first group of switches 311 connected between the first inverter 330 and the first group of coils 310 and corresponding to the first group of coils 310, respectively, and the second group of switches 321 connected between the second inverter 340 and the second group of coils 320 and corresponding to the second group of coils 320, respectively.

According to an aspect of the disclosure, the controller 360 may be configured to control the first switch 431 or 631 connected to the first coil 411, 611, 811, or 911 to an on state to transmit the first charging power, and control the second switch 442 or 642 connected to the second coil 422, 622, 822, or 922 to the on state to transmit the ping signal.

According to an aspect of the disclosure, the first group of coils 310 and the second group of coils 320 may be disposed in the same layer.

According to an aspect of the disclosure, a method of operating the wireless power transmission device 101 may include transmitting first charging power to the wireless power reception device 103 through the first coil 411, 611, 811, or 911 among the first group of coils 310 of the wireless power transmission device 101 by controlling the first inverter 330 connected to the first group of coils 310, identifying a misalignment between the wireless power reception device 103 and the first coil 411, 611, 811, or 911, and based on the identification of the misalignment, transmitting a ping signal through the second coil 422, 622, 822, or 922 adjacent to the first coil 411, 611, 811, or 911 among the second group of coils 320 of the wireless power transmission device 101 by controlling the second inverter 340 connected to the second group of coils 320. The first coil 411, 611, 811, or 911 and the second coil 422, 622, 822, or 922 may be disposed to overlap with each other over at least partial areas thereof.

According to an aspect of the disclosure, among a plurality of coils including the first group of coils 310 and the second group of coils 320, coils adjacent to each other may be disposed to overlap with each other over at least partial areas thereof, and the adjacent coils disposed to overlap with each other over the at least partial areas thereof may be connected to different inverters of the first inverter 330 and the second inverter 340.

According to an aspect of the disclosure, the method may include, after transmitting the ping signal, identifying a ping current of the second coil 422, 622, 822, or 922. The method may include, based on the ping current being less than a first reference value, controlling the second inverter 340 to transmit second charging power through the second coil 422, 622, 822, or 922.

According to an aspect of the disclosure, the method may include, based on the ping current being less than the first reference value, controlling the first inverter 330 to discontinue transmitting the first charging power through the first coil 411, 611, 811, or 911.

According to an aspect of the disclosure, identifying the misalignment may include receiving a packet related to the first charging power from the wireless power reception device 103 through the first coil 411, 611, 811, or 911. Identifying the misalignment may include identifying the misalignment based on the packet.

According to an aspect of the disclosure, the packet may include a CEP and an RPP. Identifying the misalignment may include identifying the misalignment based on the CEP being greater than a second reference value and the RPP being equal to or less than a third reference value.

According to an aspect of the disclosure, identifying the misalignment may include identifying the misalignment based on the CEP maintained greater than the second reference value during a first period and the RPP being less than or equal to the third reference value.

According to an aspect of the disclosure, transmitting the first charging power may include controlling a first switch 431, 631 connected to the first coil 411, 611, 811, or 911 to an on state. Transmitting the ping signal may include controlling a second switch 442 or 642 connected to the second coil 422, 622, 822, or 922.

According to an aspect of the disclosure, the first group of coils 310 and the second group of coils 320 may be disposed in the same layer.

According to an aspect of the disclosure, a computer-readable recording medium may store instructions configured to cause the controller 360 of the wireless power transmission device 101 to perform at least one operation. The at least one operation may include transmitting first charging power to the wireless power reception device 103 through the first coil 411, 611, 811, or 911 among the first group of coils 310 of the wireless power transmission device 101 by controlling the first inverter 330 connected to the first group of coils 310. The at least one operation may include identifying a misalignment between the wireless power reception device 103 and the first coil 411, 611, 811, or 911, and based on the identification of the misalignment. The at least one operation may include transmitting a ping signal through the second coil 422, 622, 822, or 922 adjacent to the first coil 411, 611, 811, or 911 among the second group of coils 320 of the wireless power transmission device 101 by controlling the second inverter 340 connected to the second group of coils 320. The first coil 411, 611, 811, or 911 and the second coil 422, 622, 822, or 922 may be disposed to overlap with each other over at least partial areas thereof.

According to an aspect of the disclosure, among a plurality of coils including the first group of coils 310 and the second group of coils 320, coils adjacent to each other may be disposed to overlap with each other over at least partial areas thereof, and the adjacent coils disposed to overlap with each other over the at least partial areas thereof may be connected to different inverters of the first inverter 330 and the second inverter 340.

According to an aspect of the disclosure, the at least one operation may include, after transmitting the ping signal, identifying a ping current of the second coil 422, 622, 822, or 922. The at least one operation may include, based on the ping current being less than a first reference value, controlling the second inverter 340 to transmit second charging power through the second coil 422, 622, 822, or 922.

According to an aspect of the disclosure, the at least one operation may include, based on the ping current being less than the first reference value, controlling the first inverter 330 to discontinue transmitting the first charging power through the first coil 411, 611, 811, or 911.

According to an aspect of the disclosure, identifying the misalignment may include receiving a packet related to the first charging power from the wireless power reception device 103 through the first coil 411, 611, 811, or 911. Identifying the misalignment may include identifying the misalignment based on the packet.

According to an aspect of the disclosure, the packet may include a CEP and an RPP. Identifying the misalignment may include identifying the misalignment based on the CEP being greater than a second reference value and the RPP being equal to or less than a third reference value.

According to an aspect of the disclosure, identifying the misalignment may include identifying the misalignment based on the CEP maintained greater than the second reference value during a first period and the RPP being less than or equal to the third reference value.

According to an aspect of the disclosure, transmitting the first charging power may include controlling a first switch 431, 631 connected to the first coil 411, 611, 811, or 911 to an on state. Transmitting the ping signal may include controlling a second switch 442 or 642 connected to the second coil 422, 622, 822, or 922.

According to an aspect of the disclosure, the first group of coils 310 and the second group of coils 320 may be disposed in the same layer.

The electronic device according to embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "connected to", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., a program) including one or more instructions that are stored in a storage medium (e.g., internal memory or external memory) that is readable by a machine (e.g., the wireless power transmission device 101). For example, a processor (e.g., the controller 360) of the machine (e.g., the wireless power transmission device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. A wireless power transmission device (101) comprising:
a first group of coils (310);
a first inverter (330) connected to the first group of coils (310);
a second group of coils (320);
a second inverter (340) connected to the second group of coils (320);
a converter (350) configured to provide power to the first inverter (330) and the second inverter (340);
a power source (370) configured to provide power to the converter (350); and
a controller (360),
wherein the controller (360) is configured to:
control the first inverter (330) to transmit (1001) first charging power to a wireless power reception device (103) through a first coil (411; 611; 811; 911) among the first group of coils (310),
identify (1003) a misalignment between the wireless power reception device (103) and the first coil (411; 611; 811; 911), and
based on the identification of the misalignment, control the second inverter (340) to transmit (1005) a ping signal through a second coil (422; 622; 822; 922) adjacent to the first coil (411; 611; 811; 911) among the second group of coils (320), and
wherein the first coil (411; 611; 811; 911) and the second coil (422; 622; 822; 922) are disposed to overlap with each other over at least partial areas thereof.

2. The wireless power transmission device (101) of claim 1, wherein among a plurality of coils (411; 422; 413; 424; 415; 426; 611; 622; 613; 624; 615; 626; 811; 822; 813; 824; 815; 826; 817; 828; 911; 922; 913; 934; 945; 936; 927; 918; 929) including the first group of coils (310) and the second group of coils (320), coils adjacent to each other are disposed to overlap with each other over at least partial areas thereof, and
wherein the adjacent coils disposed to overlap with each other over the at least partial areas thereof are connected to different inverters of the first inverter (330) and the second inverter (340).

3. The wireless power transmission device (101) of claim 1 or 2, wherein the controller (360) is configured to:
after transmitting the ping signal, identify (1007) a ping current of the second coil (422; 622; 822; 922), and
based on the ping current being less than a first reference value, control the second inverter (340) to transmit (1009) second charging power through the second coil (422; 622; 822; 922), and/or
based on the ping current being less than the first reference value, control the first inverter (330) to discontinue transmitting (1011) the first charging power through the first coil (411; 611; 811; 911).

4. The wireless power transmission device (101) of any one of claims 1 to 3, wherein the controller (360) is configured to:
receive a packet related to the first charging power from the wireless power reception device (103) through the first coil (411; 611; 811; 911), and
identify the misalignment based on the packet.

5. The wireless power transmission device (101) of any one of claims 1 to 4, wherein the packet includes at least one of a control error packet, CEP, and a received power packet, RPP, and
wherein the controller (360) is configured to identify the misalignment
based on the CEP being greater than a second reference value and the RPP being equal to or less than a third reference value, and/or
based on the CEP maintained greater than the second reference value during a first period and the RPP being less than or equal to the third reference value.

6. The wireless power transmission device (101) of any one of claims 1 to 5, further comprising:
a first group of switches (311) connected between the first inverter (330) and the first group of coils (310) and corresponding to the first group of coils (310), respectively, and
a second group of switches (321) connected between the second inverter (340) and the second group of coils (320) and corresponding to the second group of coils (320), respectively.

7. The wireless power transmission device (101) of any one of claims 1 to 6, wherein the controller (360) is configured to:
control a first switch (431; 631) connected to the first coil (411; 611; 811; 911) to an on state to transmit the first charging power, and
control a second switch (442; 642) connected to the second coil (422; 622; 822; 922) to the on state to transmit the ping signal.

8. The wireless power transmission device (101) of any one of claims 1 to 7, wherein the first group of coils (310) and the second group of coils (320) are disposed in a same layer.

9. A method of operating a wireless power transmission device (101), the method comprising:
transmitting (1001) first charging power to a wireless power reception device (103) through a first coil (411; 611; 811; 911) among a first group of coils (310) of the wireless power transmission device (101) by controlling a first inverter (330) connected to the first group of coils (310),
identifying (1003) misalignment between the wireless power reception device (103) and the first coil (411; 611; 811; 911), and
based on the identification of the misalignment, transmitting (1005) a ping signal through a second coil (422; 622; 822; 922) adjacent to the first coil (411; 611; 811; 911) among a second group of coils (320) of the wireless power transmission device (101) by controlling the second inverter (340) connected to the second group of coils (320),
wherein the first coil (411; 611; 811; 911) and the second coil (422; 622; 822; 922) are disposed to overlap with each other over at least partial areas thereof.

10. The method of claim 9, wherein among a plurality of coils including the first group of coils (310) and the second group of coils (320), coils adjacent to each other are disposed to overlap with each other over at least partial areas thereof, and
wherein the adjacent coils disposed to overlap with each other over the at least partial areas thereof are connected to different inverters of the first inverter (330) and the second inverter (340).

11. The method of claim 9 or 10, further comprising:
after transmitting the ping signal, identifying (1007) a ping current of the second coil (422; 622; 822; 922), and
based on the ping current being less than a first reference value, controlling the second inverter (340) to transmit (1009) second charging power through the second coil (422; 622; 822; 922), and/or
based on the ping current being less than the first reference value, controlling the first inverter (330) to discontinue transmitting (1011) the first charging power through the first coil (411; 611; 811; 911).

12. The method of any one of claims 9 to 11, wherein identifying the misalignment comprises:
receiving a packet related to the first charging power from the wireless power reception device (103) through the first coil (411; 611; 811; 911), and
identifying the misalignment based on the packet.

13. The method of any one of claims 9 to 12, wherein the packet includes at least one of a control error packet, CEP, and a received power packet, RPP, and
wherein identifying the misalignment comprises identifying the misalignment based on the CEP being greater than a second reference value and the RPP being equal to or less than a third reference value, and/or identifying the misalignment based on the CEP maintained greater than the second reference value during a first period and the RPP being less than or equal to the third reference value.

14. The method of any one of claims 9 to 13, wherein transmitting the first charging power (106) comprises controlling a first switch (431; 631) connected to the first coil (411; 611; 811; 911) to an on state, and
wherein transmitting the ping signal comprises controlling a second switch (442; 642) connected to the second coil (422; 622; 822; 922).

15. The method of any one of claims 9 to 14, wherein the first group of coils (310) and the second group of coils (320) are disposed in the same layer.
